(19) Europäisches Patentamt
European Patent Office
Office européen des brevets

(11) **EP 4 567 683 A1**

(12) **EUROPEAN PATENT APPLICATION**

(43) Date of publication:
**11.06.2025 Bulletin 2025/24**

(21) Application number: **24212987.2**

(22) Date of filing: **14.11.2024**

(51) International Patent Classification (IPC):
**G06N 5/01** (2023.01)    **G06N 10/60** (2022.01)
**G06N 10/80** (2022.01)    **G06Q 10/08** (2024.01)

(52) Cooperative Patent Classification (CPC):
**G06N 5/01; G06N 10/60; G06N 10/80; G06Q 10/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.12.2023 US 202318529928**

(71) Applicant: **SAP SE
69190 Walldorf (DE)**

(72) Inventor: **KRELLNER, Florian
69190 Walldorf (DE)**

(74) Representative: **Müller-Boré & Partner
Patentanwälte PartG mbB
Friedenheimer Brücke 21
80639 München (DE)**

(54) **QUANTUM ENHANCED OPTIMIZATION**

(57)    In an example embodiment, rather than utilizing either traditional computing optimization techniques or quantum computing optimization techniques alone, both types of techniques are utilized together to solve the same problem. The result is that the problem can be solved both more quickly and more accurately than using either technique alone.

**Description**

BACKGROUND

Quantum computing is a type of computing that uses principles of quantum mechanics to perform certain types of calculations much more efficiently than classical computers. Quantum mechanics is a branch of physics that deals with the behavior of very small particles at the quantum level, such as electrons and photons. Unlike classical computers, which use bits as the basic unit of information (0 or 1), quantum computers use quantum bits or qubits.

BRIEF DESCRIPTION OF DRAWINGS

The present disclosure is illustrated by way of example and not limitation in the figures of the accompanying drawings, in which like references indicate similar elements.

Figure 1 is a block diagram illustrating a system, in accordance with an example embodiment.
Figure 2 is a flow diagram illustrating a method, in accordance with an example embodiment.
Figure 3 is a block diagram illustrating a software architecture, which can be installed on any one or more of the devices described above.
Figure 4 illustrates a diagrammatic representation of a machine in the form of a computer system within which a set of instructions may be executed for causing the machine to perform any one or more of the methodologies discussed herein.

DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

Quantum computing techniques can be utilized to optimize for various problems. One example of such a problem could be that an organization may wish to minimize the number of trucks needed to deliver parcels, and thus the optimization problem involves finding a feasible allocation of parcels or goods to trucks given that the parcels or goods must be delivered on time.

Some of these optimizations are very difficult to solve, and thus can take an extremely long time, even for a fast classical computer. Quantum computing might offer a mechanism to speed up the solving process.

Technical challenges, however, are encountered in converting traditional optimization problems to a format usable by quantum computing. This aspect, and the fact that certain problems are still faster to solve (or simply more accurately solved) by traditional computing methods, means that often developers or administrators are left with the responsibility of choosing whether to utilize traditional computing optimization techniques or quantum computing optimization techniques to solve a particular problem.

In an example embodiment, rather than utilizing either traditional computing optimization techniques or quantum computing optimization techniques alone, both types of techniques are utilized together to solve the same problem. The result is that the problem can be solved both more quickly and more accurately than using either technique alone.

More particularly, a method is introduced that includes quantum computing in the classical solution process without negatively impacting the classical solution process.

Assume that there is an optimization problem:

$$\text{Optimize } \{f(x): x \in X\}$$

that solves a given business problem. In this notation, $f$ is the objective function that needs to be optimized, either minimized or maximized. The feasible set is $X$ and an $x \in X$ is a feasible action, for example an allocation of pilots to planes. This optimization problem may, in some example embodiments, be automatically generated by transforming the relevant data from an Enterprise Resource Planning (ERP) system and feeding such data and other sources into a model.

For the sake of simplicity, the optimization problem discussed herein is a minimization problem and thus this disclosure describes, without loss of generality, about a minimization. This, however, is not intended to be limiting and the described techniques can also be applied to optimization problems other than minimization.

A very common optimization problem is a mixed-integer linear program, which is defined as follows:

$$\text{minimze}\{c^T x : Ax = b, x \geq 0, x \in \mathbb{R}^{n_1} \times \mathbb{Z}^{n_2}\}$$

for the vectors $c \in \mathbb{R}^n, b \in \mathbb{R}^m$ and matrix $A \in \mathbb{R}^{m,n}$ with $n = n_1 + n_2$.

Given the optimization problem:

$$\text{minimize } \{f(x) : x \in X\},$$

first a preprocessing step is performed on it to obtain a more simplified problem, such as

$$\text{minimize } \{g(x) : x \in X^*\}$$

and a mapping $\tau : X^* \to X$ such that

$$x^* \in \text{argmin}\{g(x) : x \in X^*\} \Longrightarrow \tau(x*) \in \text{argmin}\{f(x) : x \in X\}.$$

A preprocessing step simplifies the problem and from results of the preprocessed problem, a solution of the original can be constructed (efficiently).

Generally speaking, preprocessing an optimization problem involves some sort of simplification of the optimization problem. This may include, for example, removing variables that are not relevant to a given problem or used for the optimization problem, adding constraints that reduce the level of complexity of the optimization problem, and so forth.

The optimization procedure is then applied to the preprocessed problem. At this point, it may not be feasible to find a solution to the problem to be solved; i.e., it might not be feasible to find an

$$x \in X^*.$$

Even if an $x \in X^*$ was found during the preprocessing step, it is not necessarily a good one with respect to the objective g.

At this point, the optimization procedure is parallelized to both a classical optimization procedure and a quantum optimization procedure. Furthermore, the output of the classical optimization procedure may be fed to the quantum optimization procedure and vice versa.

To apply the quantum optimization procedure to the problem, the model is transformed into a required format. As with the preprocessing, there is a new model

$$\text{Minimize } \{h(x) : x \in X^q\}$$

and a mapping $\tau^q : X^q \to X^*$ such that

$$x^q \in \text{argmin}\{h(x) : x \in X^q\} \Longrightarrow \tau^q(x^q) \in$$

$$\text{argmin}\{g(x) : x \in X^*\}.$$

The most prominent example of a format usably by a quantum optimization procedure is called Quadratic Unconstrained Binary Optimization (QUBO). In a QUBO problem, there is a set of binary variables, which can take on values of 0 or 1. The goal is to find the assignment of these binary variables that minimizes (or maximizes) a quadratic objective function. The objective function is quadratic because it is composed of terms involving pairs of variables, and these terms can represent the cost or energy associated with the state of the variables.

Mathematically, a QUBO problem can be represented as:

$$\text{minimize (or maximize) } F(x) = \Sigma\,(i=1 \text{ to } N)\,\Sigma\,(j=i+1 \text{ to } N)\,Q\_ij * x\_i * x\_j$$

Here, x_i and x,j are the binary variables, and Q_ij represents the coefficients that define the problem. These coefficients can be positive or negative and represent the interaction between variables i and j. The goal is to find the binary variable assignments that minimize (or maximize) this quadratic objective function.

Returning to the quantum optimization procedure, this procedure may operate using one or more quantum optimization techniques. In quantum computing, information is processed using quantum bits or qubits. These qubits can exist in states of 0, 1, or superpositions of both. The problem's complexity determines the number of qubits required.

The quantum optimization process starts with an initial state, often a superposition of potential solutions allowing the quantum computer to explore multiple options concurrently. The quantum state evolves over time according to a Hamiltonian operator encoding the objective function.

At specific intervals, measurements are taken, collapsing the quantum state into classical outcomes (0 or 1) for each qubit. These outcomes guide the algorithm in making decisions about how to proceed. Based on measurement results, the quantum state and Hamiltonian operator are adjusted in multiple iterations, gradually converging towards an optimal or near-optimal solution. In some example embodiments, a single iteration could be used.

The final measurement results provide the solution to the optimization problem.

For a found solution $x^q$ of the quantum optimization procedure, the system checks whether $x^q \in X^*$.

If this is the case, the following is set: $\mathcal{Y} = \{x^q\}$, which is the set of all the found quantum solutions so far (for which $|\mathcal{Y}| = 1$ at this point because the quantum optimization has only been run once.)

As the quantum optimization procedure runs, the classical optimization procedure also runs. The idea is to include the solution from the quantum optimization procedure in the solving process (i.e., enhance the classical optimization procedure with a quantum optimization procedure).

The classical optimization procedure needs to check whether $\mathcal{Y}$ changed. If it has, the new solutions are added to the optimization process. This can be seen as a heuristic. A heuristic is an algorithm that is good in finding solutions to your problem, without a guarantee for the solution quality.

One assumption made is that the classical optimization procedure supports callbacks. Such callbacks can be used to include heuristics into the solving process. In the present case, the heuristic checks whether $\mathcal{Y}$ changed and if it did, it extracts the changes and reports them as newfound solutions.

During the solving process of the classical optimization procedure, the classical optimization procedure can find feasible solutions $x \in X^*$. Every time such an $x$ is found, the set $\mathcal{X}$ is updated by $\mathcal{X} \leftarrow \mathcal{X} \cup \{x\}$. ($\mathcal{X}$ is initialized with $\mathcal{X} = \varnothing$.) Again, this can be done with the help of callbacks.

The solutions in $\mathcal{X}$ can be improved by the quantum optimization procedure. For an appropriate $z \in \mathcal{X}$ optimization model

$$\text{Minimize } \{h^z(x) : x \in X^2\}$$

and a mapping $\tau^z : X^z \to X^*$ are constructed such that

$$x^Z \in \text{argmin}\{h(x) : x \in X)\} \implies \tau^Z(x^Z) \in \text{argmin}\{g(x) : x \in X^*\}.$$

For a found solution $x^Z$ of the quantum optimization procedure, $x^Z \in X^*$ is checked. If this is the case, $\mathcal{Y}$ is updated by $\mathcal{Y} \leftarrow \mathcal{Y} \cup \{x^Z\}$.

In an example embodiment, the classical optimization procedure determines the runtime. If it terminates, the whole procedure terminates.

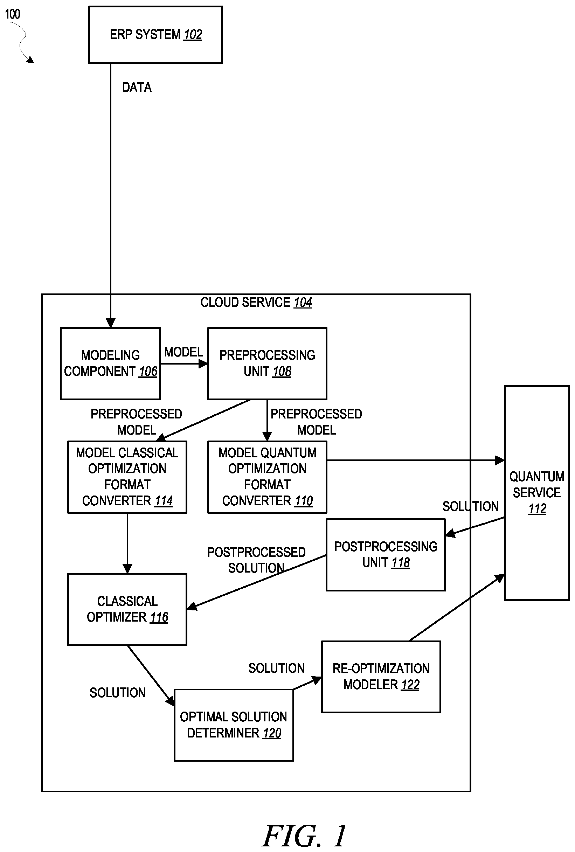

Figure 1 is a block diagram illustrating a system 100, in accordance with an example embodiment. ERP system 102 contains data, such as data related to an organization. This data may be transferred to a cloud service 104. The cloud service 104 may contain a modeling component 106 that formulates a problem as a model using the data. The model may then be preprocessed by a preprocessing unit 108, creating a preprocessed model, which is a simplified version of the model created by the modeling component. A model quantum optimization format converter 110 then converts the preprocessed model into a quantum optimizer readable model. The quantum optimizer readable model is then sent to a separate quantum service 112.

In parallel with the formation of the quantum optimizer readable model and its sending to the quantum service 112, a model classical optimization format converter 114 transforms the preprocessed model into a classical optimizer readable model. A classical optimizer 116 is then able to find a solution to the problem by operating on the classical optimizer readable model, while in parallel, the quantum service 112 finds a solution to the problem by operating on the quantum optimizer readable model. The quantum service 112 then sends the solution it found to a postprocessing unit 118 on the cloud service 104. The postprocessing unit 118 combines the quantum optimizer readable model with the solution from the quantum service to create a postprocessed solution. This postprocessed solution is then fed as input to the classical optimizer 116, which uses it to help find a solution using classical optimization techniques (either prior to finding its solution the first time, or on subsequent iterations). An optimal solution determiner 120 determines if the solution from the classical optimizer 116 is "optimal." If not, then a loop is created, with the output of the classical optimizer 116 being sent to the quantum service 112 and the output of the quantum service 112 being sent to the classical optimizer. The solution from the classical optimizer 116 can be transformed by a re-optimization modeler 122 to a re-optimization model readable by the quantum service 112. At each iteration of this loop, an optimal solution determiner 120 determines if an "optimal" solution to the problem has been found by this combination of the classical optimizer 116 and the quantum service 112.

It should be noted that the meaning of "optimal" can vary based upon the needs of the designer or administrator and thus the term "optimal" in this context shall not be interpreted to be limited to an absolute "best" solution. For example, while one administrator may indeed be looking for the absolute "best" solution, another may be looking for simply the best solution that can be found that is within 5% of some desired endpoint, or the best solution that can be found after a fixed number of iterations. In other words, "optimal" does not necessarily mean "best" but instead means "good enough, based on some criteria set up by someone in charge of the system."

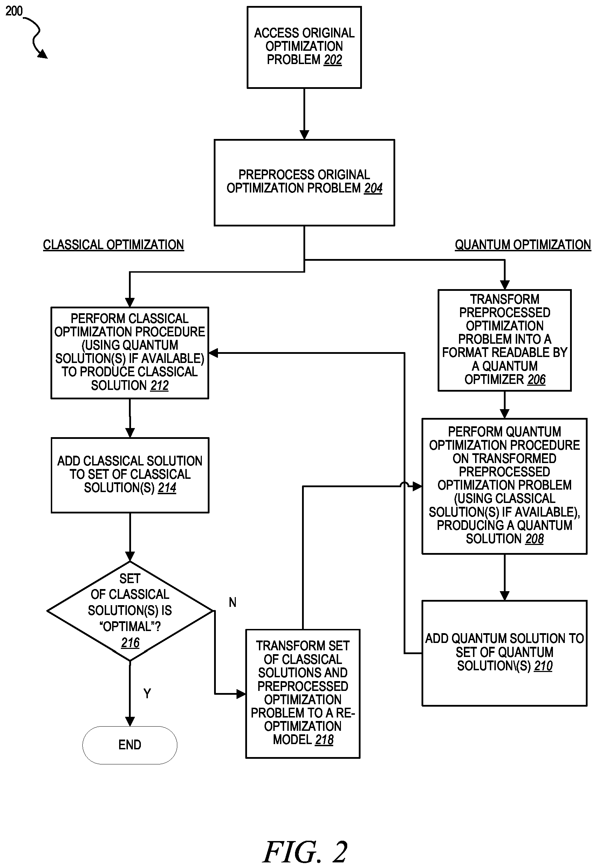

Figure 2 is a flow diagram illustrating a method 200, in accordance with an example embodiment. At operation 202, an original optimization problem is accessed. This optimization problem may be, for example, related to data in an ERP system. At operation 204, the original optimization problem is preprocessed to create a preprocessed optimization problem.

Two separate branches from operation 204 reflect two separate paths that are both followed. In some example embodiments, these two separate paths are followed in parallel. In the first path, a quantum optimization procedure will be followed. As such, at operation 206, the preprocessed optimization problem is transformed into a format readable by a quantum optimizer. At operation 208, a quantum optimizer performs a quantum optimization procedure on the transformed preprocessed optimization problem, producing a quantum solution. At operation 210, the quantum solution is added to a set of quantum solutions to the original optimization problem. This set reflects the quantum solutions found at each iteration of the quantum optimization procedure. Thus the set will be empty upon first execution of operation 208 and 210, and then after execution of operation 208 and 210 the first time the set will have one solution, with each subsequent execution of operation 208 and 210 adding another solution to the set.

In parallel, in the second path, a classical optimization procedure is performed at operation 212, producing a classical solution. This may include using the set of quantum solutions produced by the first pass, if available. At operation 214, the classical solution is added to a set of classical solutions to the original optimization problem. This set reflects the classical solutions found at each iteration of the classical optimization procedure. Thus, the set will be empty upon first execution of operation 212 and 214, and then after execution of operation 212 and 214 the first time the set will have one solution, with each subsequent execution of operation 212 and 214 adding another solution to the set. The output of the classical optimization procedure at each iteration is what is used to determine whether additional iterations of both the classical optimization procedure and the quantum optimization procedure are needed. Therefore, at operation 216, it is determined whether the set of classical solutions is "optimal." As mentioned before, "optimal" is determined based on one or more preset criteria. If so, then the method 200 ends. If not, then at operation 218, the set of classical solutions and the preprocessed optimization problem are transformed to a re-optimization model readable by a quantum optimizer. This re-optimization model is then used in another execution of operation 208 and 210. The method 200 therefore keeps looping until at operation 216 it is determined that the set of classical solutions is "optimal."

In view of the above-described implementations of subject matter, this application discloses the following list of examples, wherein one feature of an example in isolation or more than one feature of said example taken in combination and, optionally, in combination with one or more features of one or more further examples are further examples also falling within the disclosure of this application:

Example 1 is a system comprising: at least one hardware processor; a computer-readable medium storing instructions that, when executed by the at least one hardware processor, cause the at least one hardware processor to perform operations comprising: accessing an optimization problem; transforming the optimization problem into a quantum readable optimization model; causing a quantum optimization procedure to be performed on the quantum readable optimization model, producing a quantum solution to the optimization problem; and passing the quantum solution and the optimization problem to a classical optimization procedure, the classical optimization procedure finding a classical solution to the optimization problem based at least in part on the quantum solution.

In Example 2, the subject matter of Example 1 includes, wherein the operations further comprise: determining whether the classical solution is considered an optimal solution based on a set of criteria; and in response to a determination that the classical solution is not considered an optimal solution: transforming the classical solution and the optimization problem into a quantum readable re-optimization model; and causing the quantum optimization procedure to be performed on the quantum readable re-optimization model; and passing the quantum solution and the optimization problem to a classical optimization procedure, the classical optimization procedure finding a classical solution to the optimization problem based at least in part on the quantum solution.

In Example 3, the subject matter of Example 2 includes, wherein the operations further comprise: repeating the determining and the operations performed in response to a determination that the classical solution is not considered an optimal solution until it is determined that the classical solution is considered an optimal solution.

In Example 4, the subject matter of Examples 1-3 includes, wherein the quantum optimization procedure is performed by a quantum service separate and distinct from a service performing the operations.

In Example 5, the subject matter of Examples 1-4 includes, wherein the optimization problem is created using data extracted from an Enterprise Resource Planning (ERP) system.

In Example 6, the subject matter of Examples 1-5 includes, wherein the optimization problem is a minimization problem.

In Example 7, the subject matter of Examples 1-6 includes, wherein the quantum readable optimization model is in QUBO format.

Example 8 is a method comprising: accessing an optimization problem; transforming the optimization problem into a quantum readable optimization model; causing a quantum optimization procedure to be performed on the quantum readable optimization model, producing a quantum solution to the optimization problem; and passing the quantum solution and the optimization problem to a classical optimization procedure, the classical optimization procedure finding a classical solution to the optimization problem based at least in part on the quantum solution.

In Example 9, the subject matter of Example 8 includes, determining whether the classical solution is considered an optimal solution based on a set of criteria; and in response to a determination that the classical solution is not considered an optimal solution: transforming the classical solution and the optimization problem into a quantum readable re-optimization model; and causing the quantum optimization procedure to be performed on the quantum readable re-optimization model; and passing the quantum solution and the optimization problem to a classical optimization procedure, the classical optimization procedure finding a classical solution to the optimization problem based at least in part on the quantum solution.

In Example 10, the subject matter of Example 9 includes, wherein the method further comprises: repeating the determining and the operations performed in response to a determination that the classical solution is not considered an optimal solution until it is determined that the classical solution is considered an optimal solution.

In Example 11, the subject matter of Examples 8-10 includes, wherein the quantum optimization procedure is performed by a quantum service separate and distinct from a service performing the operations.

In Example 12, the subject matter of Examples 8-11 includes, wherein the optimization problem is created using data extracted from an ER) system.

In Example 13, the subject matter of Examples 8-12 includes, wherein the optimization problem is a minimization problem.

In Example 14, the subject matter of Examples 8-13 includes, wherein the quantum readable optimization model is in the QUBO format.

Example 15 is a non-transitory machine-readable medium storing instructions which, when executed by one or more processors, cause the one or more processors to perform operations comprising: accessing an optimization problem; transforming the optimization problem into a quantum readable optimization model; causing a quantum optimization procedure to be performed on the quantum readable optimization model, producing a quantum solution to the optimization problem; and passing the quantum solution and the optimization problem to a classical optimization procedure, the classical optimization procedure finding a classical solution to the optimization problem based at least in part on the quantum solution.

In Example 16, the subject matter of Example 15 includes, wherein the method further comprises: determining whether the classical solution is considered an optimal solution based on a set of criteria; and in response to a determination that the classical solution is not considered an optimal solution: transforming the classical solution and the optimization problem into a quantum readable re-optimization model; and causing the quantum optimization procedure to be performed on the quantum readable re-optimization model; and passing the quantum solution and the optimization problem to a classical optimization procedure, the classical optimization procedure finding a classical solution to the optimization problem based at least in part on the quantum solution.

In Example 17, the subject matter of Example 16 includes, wherein the operations further comprise: repeating the determining and the operations performed in response to a determination that the classical solution is not considered an optimal solution until it is determined that the classical solution is considered an optimal solution.

In Example 18, the subject matter of Examples 15-17 includes, wherein the quantum optimization procedure is performed by a quantum service separate and distinct from a service performing the operations.

In Example 19, the subject matter of Examples 15-18 includes, wherein the optimization problem is created using data extracted from an ERP system.

In Example 20, the subject matter of Examples 15-19 includes, wherein the optimization problem is a minimization problem.

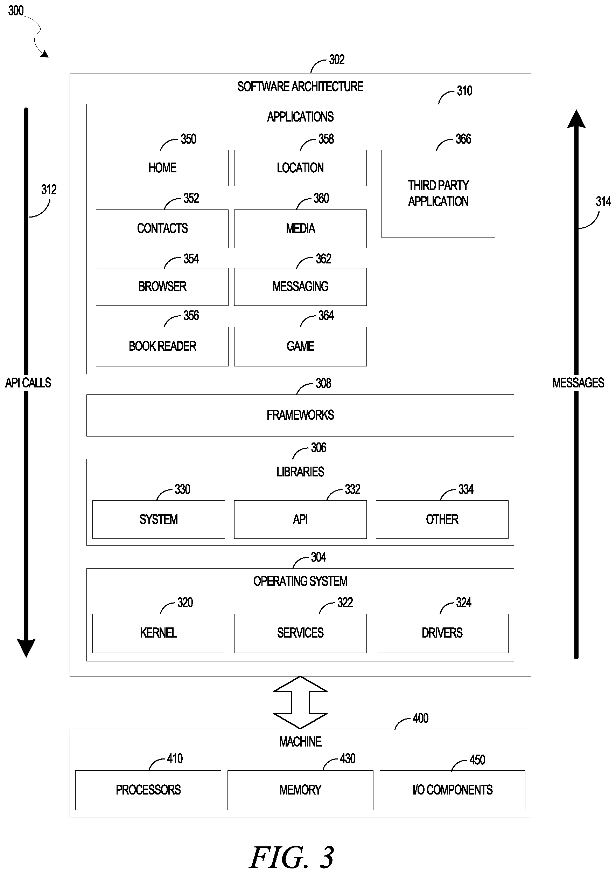

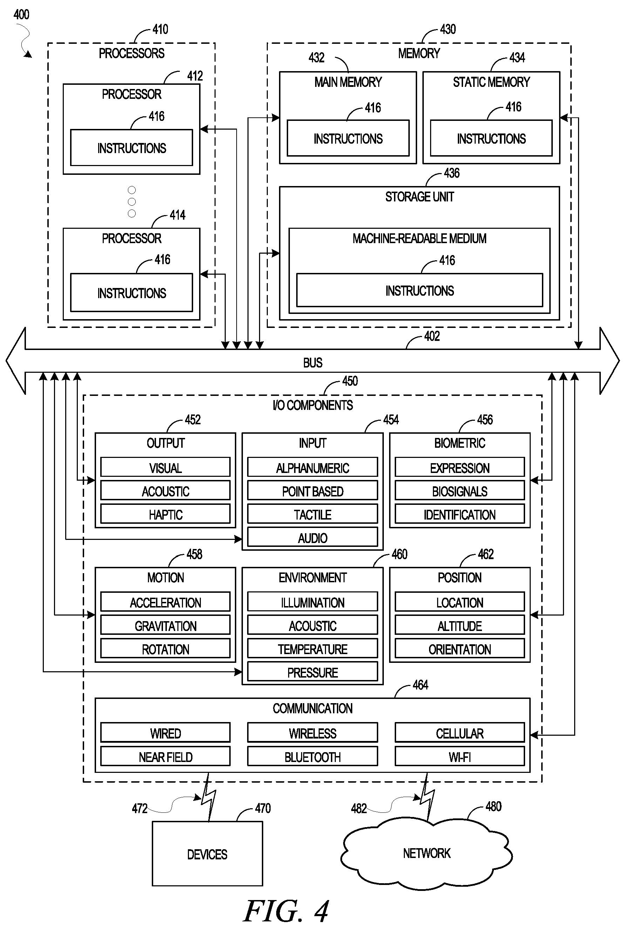

Figure 3 is a block diagram 300 illustrating a software architecture 302, which can be installed on any one or more of the devices described above. Figure 3 is merely a non-limiting example of a software architecture, and it will be appreciated that many other architectures can be implemented to facilitate the functionality described herein. In various embodiments, the software architecture 302 is implemented by hardware such as a machine 400 of Figure 4 that includes processors 410, memory 430, and input/output (I/O) components 450. In this example architecture, the software architecture 302 can be conceptualized as a stack of layers where each layer may provide a particular functionality. For example, the software architecture 302 includes layers such as an operating system 304, libraries 306, frameworks 308, and applications 310. Operationally, the applications 310 invoke API calls 312 through the software stack and receive messages 314 in response to the API calls 312, consistent with some embodiments.

In various implementations, the operating system 304 manages hardware resources and provides common services. The operating system 304 includes, for example, a kernel 320, services 322, and drivers 324. The kernel 320 acts as an abstraction layer between the hardware and the other software layers, consistent with some embodiments. For example, the kernel 320 provides memory management, processor management (e.g., scheduling), component management, networking, and security settings, among other functionality. The services 322 can provide other common services for the other software layers. The drivers 324 are responsible for controlling or interfacing with the underlying hardware. For instance, the drivers 324 can include display drivers, camera drivers, BLUETOOTH® or BLUETOOTH® Low-Energy drivers, flash memory drivers, serial communication drivers (e.g., Universal Serial Bus (USB) drivers), Wi-Fi® drivers, audio drivers, power management drivers, and so forth.

In some embodiments, the libraries 306 provide a low-level common infrastructure utilized by the applications 310. The libraries 306 can include system libraries 330 (e.g., C standard library) that can provide functions such as memory allocation functions, string manipulation functions, mathematic functions, and the like. In addition, the libraries 306 can include API libraries 332 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (PEG or JPG), or Portable Network Graphics (PNG), graphics libraries (e.g., an OpenGL framework used to render in two-dimensional (2D) and three-dimensional (3D) in a graphic context on a display), database libraries (e.g., SQLite to provide various relational database functions), web libraries (e.g., WebKit to provide web browsing functionality), and the like. The libraries 306 can also include a wide variety of other libraries 334 to provide many other APIs to the applications 310.

The frameworks 308 provide a high-level common infrastructure that can be utilized by the applications 310. For example, the frameworks 308 provide various graphical user interface functions, high-level resource management, high-level location services, and so forth. The frameworks 308 can provide a broad spectrum of other APIs that can be utilized by the applications 310, some of which may be specific to a particular operating system 304 or platform.

In an example embodiment, the applications 310 include a home application 350, a contacts application 352, a browser application 354, a book reader application 356, a location application 358, a media application 360, a messaging application 362, a game application 364, and a broad assortment of other applications, such as a third-party application 366. The applications 310 are programs that execute functions defined in the programs. Various programming languages can be employed to create one or more of the applications 310, structured in a variety of manners, such as object-oriented programming languages (e.g., Objective-C, Java, or C++) or procedural programming languages (e.g., C or assembly language). In a specific example, the third-party application 366 (e.g., an application developed using the ANDROID™ or IOS™ software development kit [SDK] by an entity other than the vendor of the particular platform) may be mobile software running on a mobile operating system such as IOS™, ANDROID™, WINDOWS® Phone, or another mobile operating system. In this example, the third-party application 366 can invoke the API calls 312 provided by the operating system 304 to facilitate functionality described herein.

Figure 4 illustrates a diagrammatic representation of a machine 400 in the form of a computer system within which a set of instructions may be executed for causing the machine 400 to perform any one or more of the methodologies discussed herein. Specifically, Figure 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein may be executed. For example, the instructions 416 may cause the machine 400 to execute the method of Figure 2. Additionally, or alternatively, the instructions 416 may implement Figures 1-4 and so forth. The instructions 416 transform the general, non-programmed machine 400 into a particular machine 400 programmed to carry out the described and illustrated functions in the manner described. In alternative embodiments, the machine 400 operates as a standalone device or may be coupled (e.g., networked) to other machines. In a networked deployment, the machine 400 may operate in the capacity of a server machine or a client machine in a server-client network environment, or as a peer machine in a peer-to-peer [or distributed] network environment. The machine 400 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device [e.g., a smart watch], a smart home device [e.g., a smart appliance], other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 may include processors 410, memory 430, and I/O components 450, which may be configured to communicate with each other such as via a bus 402. In an example embodiment, the processors 410 (e.g., a central processing unit (CPU), a reduced instruction set computing (RISC) processor, a complex instruction set computing (CISC) processor, a graphics processing unit (GPU), a digital signal processor D(SP), an application-specific integrated circuit (ASIC), a radio-frequency integrated circuit (RFIC), another processor, or any suitable combination thereof) may include, for example, a processor 412 and a processor 414 that may execute the instructions 416. The term "processor" is intended to include multi-core processors that may comprise two or more independent processors (sometimes referred to as "cores") that may execute instructions 416 contemporaneously. Although Figure 4 shows multiple processors 410, the machine 400 may include a single processor 412 with a single core, a single processor 412 with multiple cores (e.g., a multi-core processor 412), multiple processors 412, 414 with a single core, multiple processors 412, 414 with multiple cores, or any combination thereof.

The memory 430 may include a main memory 432, a static memory 434, and a storage unit 436, each accessible to the processors 410 such as via the bus 402. The main memory 432, the static memory 434, and the storage unit 436 store the instructions 416 embodying any one or more of the methodologies or functions described herein. The instructions 416 may also reside, completely or partially, within the main memory 432, within the static memory 434, within the storage unit 436, within at least one of the processors 410 (e.g., within the processor's cache memory), or any suitable combination thereof, during execution thereof by the machine 400.

The I/O components 450 may include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 may include many other components that are not shown in Figure 4. The I/O components 450 are grouped according to functionality merely for simplifying the following discussion, and the grouping is in no way limiting. In various example embodiments, the I/O components 450 may include output components 452 and input components 454. The output components 452 may include visual components (e.g., a display such as a plasma display panel [PDP], a light-emitting diode (LED) display, a liquid crystal display (LCD), a projector, or a cathode ray tube (CRT), acoustic components (e.g., speakers), haptic components (e.g., a vibratory motor, resistance mechanisms), other signal generators, and so forth. The input components 454 may include alphanumeric input components (e.g., a keyboard, a touch screen configured to receive alphanumeric input, a photooptical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 450 may include biometric components 456, motion components 458, environmental components 460, or position components 462, among a wide array of other components. For example, the biometric components 456 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 458 may include acceleration sensor components (e.g., accelerometer), gravitation sensor components, rotation sensor components (e.g., gyroscope), and so forth. The environmental components 460 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 462 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 450 may include communication components 464 operable to couple the machine 400 to a network 480 or devices 470 via a coupling 482 and a coupling 472, respectively. For example, the communication components 464 may include a network interface component or another suitable device to interface with the network 480. In further examples, the communication components 464 may include wired communication components, wireless communication components, cellular communication components, near field communication (NFC) components, Bluetooth® components (e.g., Bluetooth® Low Energy), Wi-Fi® components, and other communication components to provide communication via other modalities. The devices 470 may be another machine or any of a wide variety of peripheral devices (e.g., coupled via a USB).

Moreover, the communication components 464 may detect identifiers or include components operable to detect identifiers. For example, the communication components 464 may include radio-frequency identification (RFID) tag reader components, NFC smart tag detection components, optical reader components (e.g., an optical sensor to detect one-dimensional bar codes such as Universal Product Code [UPC] bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 464, such as location via Internet Protocol (IP) geolocation, location via Wi-Fi® signal triangulation, location via detecting an NFC beacon signal that may indicate a particular location, and so forth.

The various memories (i.e., 430, 432, 434, and/or memory of the processor(s) 410) and/or the storage unit 436 may store one or more sets of instructions 416 and data structures (e.g., software) embodying or utilized by any one or more of the methodologies or functions described herein. These instructions (e.g., the instructions 416), when executed by the processor(s) 410, cause various operations to implement the disclosed embodiments.

As used herein, the terms "machine-storage medium," "device-storage medium," and "computer-storage medium" mean the same thing and may be used interchangeably. The terms refer to single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), fieldprogrammable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 480 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi® network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 416 may be transmitted or received over the network 480 using a transmission medium via a network interface device (e.g., a network interface component included in the communication components 464) and utilizing any one of a number of well-known transfer protocols (e.g., Hypertext Transfer Protocol (HTTP)). Similarly, the instructions 416 may be transmitted or received using a transmission medium via the coupling 472 (e.g., a peer-to-peer coupling) to the devices 470. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 416 for execution by the machine 400, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

**Claims**

1. A system comprising:

   at least one hardware processor;
   a computer-readable medium storing instructions that, when executed by the at least one hardware processor, cause the at least one hardware processor to perform operations comprising:

      accessing an optimization problem;
      transforming the optimization problem into a quantum readable optimization model, the quantum readable optimization model taking one or more qubits as input;
      causing a quantum optimization procedure to be performed on the quantum readable optimization model, producing a quantum solution to the optimization problem; and
      passing the quantum solution and the optimization problem to a classical optimization procedure, the classical optimization procedure finding a classical solution to the optimization problem based at least in part on the quantum solution.

2. The system of claim 1, wherein the operations further comprise:

   determining whether the classical solution is considered an optimal solution based on a set of criteria; and
   in response to a determination that the classical solution is not considered an optimal solution:

      transforming the classical solution and the optimization problem into a quantum readable re-optimization model; and
      causing the quantum optimization procedure to be performed on the quantum readable re-optimization model; and
      passing the quantum solution and the optimization problem to a classical optimization procedure, the classical optimization procedure finding a classical solution to the optimization problem based at least in part on the quantum solution.

3. The system of claim 2, wherein the operations further comprise:
   repeating the determining and the operations performed in response to a determination that the classical solution is not considered an optimal solution until it is determined that the classical solution is considered an optimal solution.

4. The system of any one of claims 1 to 3, wherein the quantum optimization procedure is performed by a quantum service separate and distinct from a service performing the operations.

5. The system of any one of claims 1 to 4, wherein the optimization problem is created using data extracted from an Enterprise Resource Planning (ERP) system.

6. The system of any one of claims 1 to 5, wherein the optimization problem is a minimization problem.

7. The system of any one of claims 1 to 6, wherein the quantum readable optimization model is in Quadratic Unconstrained Binary Optimization (QUBO) format.

8. A method comprising:

   accessing an optimization problem;
   transforming the optimization problem into a quantum readable optimization model, the quantum readable optimization model taking one or more qubits as input;
   causing a quantum optimization procedure to be performed on the quantum readable optimization model, producing a quantum solution to the optimization problem; and

passing the quantum solution and the optimization problem to a classical optimization procedure, the classical optimization procedure finding a classical solution to the optimization problem based at least in part on the quantum solution.

9.  The method of claim 8, further comprising:

    determining whether the classical solution is considered an optimal solution based on a set of criteria; and
    in response to a determination that the classical solution is not considered an optimal solution:

    transforming the classical solution and the optimization problem into a quantum readable re-optimization model; and
    causing the quantum optimization procedure to be performed on the quantum readable re-optimization model; and
    passing the quantum solution and the optimization problem to a classical optimization procedure, the classical optimization procedure finding a classical solution to the optimization problem based at least in part on the quantum solution.

10. The method of claim 9, wherein the method further comprises:
    repeating the determining and operations performed in response to a determination that the classical solution is not considered an optimal solution until it is determined that the classical solution is considered an optimal solution.

11. The method of any one of claims 8 to 10, wherein the quantum optimization procedure is performed by a quantum service separate and distinct from a service performing the method.

12. The method of any one of claims 8 to 11, wherein the optimization problem is created using data extracted from an Enterprise Resource Planning (ERP) system.

13. The method of any one of claims 8 to 12, wherein the optimization problem is a minimization problem.

14. The method of any one of claims 8 to 13, wherein the quantum readable optimization model is in Quadratic Unconstrained Binary Optimization (QUBO) format.

15. A non-transitory machine-readable medium storing instructions which, when executed by one or more processors, cause the one or more processors to perform operations according to the method of any one of claims 8 to 14.

*FIG. 1*

200

ACCESS ORIGINAL
OPTIMIZATION
PROBLEM *202*

PREPROCESS ORIGINAL
OPTIMIZATION PROBLEM *204*

CLASSICAL OPTIMIZATION

QUANTUM OPTIMIZATION

PERFORM CLASSICAL
OPTIMIZATION PROCEDURE
(USING QUANTUM
SOLUTION(S) IF AVAILABLE)
TO PRODUCE CLASSICAL
SOLUTION *212*

TRANSFORM
PREPROCESSED
OPTIMIZATION
PROBLEM INTO A
FORMAT READABLE BY
A QUANTUM
OPTIMIZER *206*

ADD CLASSICAL SOLUTION
TO SET OF CLASSICAL
SOLUTION(S) *214*

PERFORM QUANTUM
OPTIMIZATION PROCEDURE
ON TRANSFORMED
PREPROCESSED
OPTIMIZATION PROBLEM
(USING CLASSICAL
SOLUTION(S) IF AVAILABLE),
PRODUCING A QUANTUM
SOLUTION *208*

SET
OF CLASSICAL
SOLUTION(S) IS
"OPTIMAL"?
*216*

N

Y

TRANSFORM SET
OF CLASSICAL
SOLUTIONS AND
PREPROCESSED
OPTIMIZATION
PROBLEM TO A RE-
OPTIMIZATION
MODEL *218*

ADD QUANTUM SOLUTION TO
SET OF QUANTUM
SOLUTION\(S) *210*

END

*FIG. 2*

*FIG. 3*

400

**410**

PROCESSORS

**412**
PROCESSOR

**416**
INSTRUCTIONS

○
○
○

**414**
PROCESSOR

**416**
INSTRUCTIONS

**430**

MEMORY

**432**
MAIN MEMORY

**416**
INSTRUCTIONS

**434**
STATIC MEMORY

**416**
INSTRUCTIONS

**436**
STORAGE UNIT

MACHINE-READABLE MEDIUM

**416**
INSTRUCTIONS

**402**
BUS

**450**
I/O COMPONENTS

**452**
OUTPUT

VISUAL

ACOUSTIC

HAPTIC

**454**
INPUT

ALPHANUMERIC

POINT BASED

TACTILE

AUDIO

**456**
BIOMETRIC

EXPRESSION

BIOSIGNALS

IDENTIFICATION

**458**
MOTION

ACCELERATION

GRAVITATION

ROTATION

**460**
ENVIRONMENT

ILLUMINATION

ACOUSTIC

TEMPERATURE

PRESSURE

**462**
POSITION

LOCATION

ALTITUDE

ORIENTATION

**464**
COMMUNICATION

WIRED

NEAR FIELD

WIRELESS

BLUETOOTH

CELLULAR

WI-FI

**472**     **470**
DEVICES

**482**     **480**
NETWORK

*FIG. 4*

Europäisches
Patentamt

European
Patent Office

Office européen
des brevets

## EUROPEAN SEARCH REPORT

**Application Number**

EP 24 21 2987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/226197 A1 (WOERNER STEFAN [CH] ET AL) 16 July 2020 (2020-07-16) <br> * paragraph [0001] * <br> * paragraph [0005] - paragraph [0015] * <br> * paragraph [0023] - paragraph [0043] * <br> * paragraph [0058] * <br> * paragraph [0072] - paragraph [0091]; figures 1-6 * | 1-15 | INV.<br>G06N5/01<br>G06N10/60<br>G06N10/80<br>G06Q10/08 |
| X | AMIRA ABBAS ET AL: "Quantum Optimization: Potential, Challenges, and the Path Forward", ARXIV.ORG, CORNELL UNIVERSITY LIBRARY, 201 OLIN LIBRARY CORNELL UNIVERSITY ITHACA, NY 14853, 4 December 2023 (2023-12-04), XP091664586, <br> * page 12 - page 23 * <br> * page 34 - page 51 * | 1-15 | |
| A | ANGONE ANTHONY ET AL: "Hybrid Quantum-Classical Multilevel Approach for Maximum Cuts on Graphs", 2023 IEEE HIGH PERFORMANCE EXTREME COMPUTING CONFERENCE (HPEC), IEEE, 25 September 2023 (2023-09-25), pages 1-7, XP034505849, DOI: 10.1109/HPEC58863.2023.10363584 [retrieved on 2023-12-25] <br> * the whole document * | 1-15 | **TECHNICAL FIELDS SEARCHED (IPC)**<br><br>G06N<br>G06Q |

The present search report has been drawn up for all claims

| Place of search | Date of completion of the search | Examiner |
|---|---|---|
| The Hague | 1 April 2025 | Cilia, Elisa |

EPO FORM 1503 03.82 (P04C01)

## ANNEX TO THE EUROPEAN SEARCH REPORT
## ON EUROPEAN PATENT APPLICATION NO.

EP 24 21 2987

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | Publication date |
|---|---|---|---|
| US 2020226197 A1 | 16-07-2020 | NONE | |

For more details about this annex : see Official Journal of the European Patent Office, No. 12/82